**Europäisches Patentamt**

**European Patent Office**

**Office européen des brevets**

(11) Numéro de publication : **0 346 182 B1**

# FASCICULE DE BREVET EUROPEEN

(45) Date de publication du fascicule du brevet :
**22.07.92 Bulletin 92/30**

(51) Int. Cl.$^5$ : **G01D 5/12**, G08C 17/00

(21) Numéro de dépôt : **89401461.2**

(22) Date de dépôt : **29.05.89**

(54) **Dispositif de mesure de grandeur physique au moyen d'un capteur mobile.**

(30) Priorité : **31.05.88 FR 8807228**

(43) Date de publication de la demande :
**13.12.89 Bulletin 89/50**

(45) Mention de la délivrance du brevet :
**22.07.92 Bulletin 92/30**

(84) Etats contractants désignés :
**DE ES GB SE**

(56) Documents cités :
**DE-A- 3 311 010**
**US-A- 4 596 927**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Colineaux, Yvon 89, Avenue de la Paix F-92130 Issy Les Moulineaux (FR)**
Inventeur : **Le Meur, Roger 1, Place Paul Fort F-91370 Verrières Le Buisson (FR)**

(74) Mandataire : **Mongrédien, André et al c/o BREVATOME 25, rue de Ponthieu F-75008 Paris (FR)**

EP 0 346 182 B1

Jouve, 18, rue Saint-Denis, 75001 PARIS

## Description

L'invention concerne la mesure de la répartition linéaire ou spatiale d'un débit de fluence de particules d'énergie fixée. Cette répartition "carte de flux" est établie à l'aide d'un détecteur mobile traversant la zone concernée.

Pour établir une telle carte de flux, on utilise généralement comme détecteurs des chambres à fission ou des chambres d'ionisation. Dans le second cas, les éléments principaux de la chaîne sont les suivants.

– D'abord, l'élément de mesure, en l'occurrence un détecteur, est générateur de courant, c'est-à-dire qu'il délivre un courant d'intensité proportionnelle ou caractéristique de la grandeur mesurée.
– Le détecteur étant mobile, il est nécessaire de prévoir ensuite un treuil sur le tambour duquel s'enroule un câble électrique issu du détecteur.
– Il faut disposer d'une source électrique délivrant un signal caractéristique de la mesure, donc un convertisseur du courant représentatif mesuré en une tension exploitable.
– Enfin, parfois, il est nécessaire de polariser le détecteur à partir d'un générateur de tension.

Une première méthode consiste à utiliser un dispositif comme décrit par exemple dans US-A-4 596 927, constitué de la chaîne de mesure suivante. Le détecteur est connecté à un câble à un ou plusieurs conducteurs, enroulé autour du tambour. Celui-ci est équipé de contacts électriques tournants. Ces derniers sont raccordés à un câble pour transmettre le courant caractéristique de la mesure à un convertisseur courant-tension à poste fixe. L'exploitation de la mesure se fait au moyen d'un voltmètre électronique fixe terminant ladite chaîne. Les câbles contiennent des conducteurs servant à la mesure du courant. Ils peuvent également servir pour la haute tension de polarisation du détecteur. Les contacts électriques tournants sont constitués par des couples de bagues collectrices associées à des balais. L'ensemble formé du convertisseur courant-tension et du voltmètre est placé dans un châssis.

Si le premier câble est un conducteur unique pour le courant et la polarisation du détecteur, il apparaît, lors des mesures, des courants parasites dans ce conducteur et dans les contacts électriques tournants. Ces courants parasites sont d'autant plus élevés que la tension de polarisation est importante, ce qui dégrade le seuil de la mesure. Si ce même câble comprend des conducteurs séparés pour le courant et pour la polarisation du détecteur, le conducteur du courant de mesure et son couple correspondant bague collectrice-balai ne sont plus portés à un potentiel élevé et leurs courants de fuite sont plus faibles. Ceci permet d'avoir un seuil de mesure plus bas.

Toutefois, certaines restrictions persistent. En effet, le montage à deux conducteurs séparés, courant et polarisation, n'est pas toujours possible, par exemple dans le cas d'une miniaturisation du détecteur. D'autre part, le seuil de mesure, encore fixé par certains courants de fuite du conducteur du courant de mesure et du couple correspondant bague collectrice-balai correspondant, peut être trop élevé pour des mesures de courant très faibles.

Une autre méthode consiste à utiliser un dispositif de mesure constitué par la chaîne suivante. Le détecteur est réuni directement à un convertisseur courant-tension mobile avec lui. Un premier câble est donc connecté à cet ensemble par une première extrémité, sa deuxième extrémité étant fixée au tambour associé aux contacts électriques tournants. Un deuxième câble, qui est fixe, est connecté aux balais fixes de sortie des contacts électriques tournants, pour communiquer la tension caractéristique de la mesure au voltmètre. Ce montage est tributaire des conditions de mesure, et en particulier de la chaleur et de la radioactivité. En effet, ce montage n'est pas compatible avec une mesure à température élevée ou à fort débit de dose, le convertisseur ne supportant pas de telles conditions d'utilisation.

Le but de l'invention est de remédier aux inconvénients inhérents aux deux dispositifs précédemments décrits.

Par conséquent, l'objet principal de l'invention est un dispositif de mesure d'une grandeur physique au moyen d'un capteur mobile. Ce dispositif de mesure comprend le capteur mobile constituant une première extrémité mobile de la chaîne de mesure ; ce capteur, générateur d'un premier signal électrique représentatif de la mesure, est connecté à une première extrémité d'un premier câble électrique s'enroulant autour d'un tambour mobile en rotation, pour faire passer par traction le capteur mobile à travers une zone à mesurer, la seconde extrémité du câble étant fixée au tambour. Le dispositif comprend également des moyens de conversion du premier signal électrique représentatif de la mesure en un deuxième signal électrique exploitable. Il utilise des moyens de transmission qui comportent au moins une bague collectrice sur laquelle vient frotter un balai placé en regard de cette bague, un de ces deux éléments étant placé sur le tambour, l'autre étant solidaire d'une partie fixe de la deuxième extrémité de la chaîne. Le tambour et cette partie fixe sont coaxiaux, une surface externe de l'un étant placée en regard d'une surface interne de l'autre pour transmettre le deuxième signal électrique exploitable issu des moyens de conversion à une deuxième extrémité (fixe) de la chaîne qui est constituée de moyens d'exploitation du signal exploitable. Le dispositif selon l'invention se caractérise par le fait que les moyens de conversion sont solidaires du tambour, reçoivent le signal représentatif de la mesure issue du premier câble, et délivrent le signal exploitable aux moyens de transmission.

Dans la principale réalisation, le signal représentatif de la mesure est un courant électrique. Dans ce cas, le signal exploitable est une tension électrique.

Cette réalisation permet de loger les moyens de conversion courant-tension à l'intérieur du tambour ainsi que le générateur de tension de polarisation du détecteur. Un tel dispositif peut permettre de réaliser la conversion courant-tension sous la forme d'un boîtier électronique encastrable dans le tambour.

Plusieurs réalisations sont ainsi possibles. Le tambour peut entourer un axe fixe, ou être entouré d'un capot fixe.

La bague peut ainsi être, soit fixe, soit tournante, selon la réalisation adoptée. Il en est de même en ce qui concerne le balai frotteur.

Dans les trois versions à signaux électriques, le signal mesuré peut être, soit une charge électrique, soit un courant électrique, soit une tension électrique faible, le signal exploitable étant une tension électrique.

Enfin, le dispositif peut comprendre, pour la polarisation du détecteur, un boîtier d'alimentation en haute tension placé sur le tambour.

L'invention et ses caractéristiques seront mieux comprises à la lecture de la description qui suit, annexée des figures représentant respectivement :

– figure 1, un schéma écorché du dispositif de mesure selon une première réalisation de l'invention ;

– figure 2, un schéma écorché du dispositif de mesure selon une deuxième réalisation de l'invention ;

– figure 3, une vue représentant le dispositif selon l'invention dans une de ses utilisations.

On rappelle que le principe de fonctionnement d'un dispositif de mesure de flux neutronique auquel s'applique l'invention, est le suivant. Il consiste à faire déplacer un détecteur à travers une zone dans laquelle on désire mesurer la répartition spatiale du débit de fluence de neutrons, ou "flux" ; ce détecteur est générateur d'un courant qui peut prendre des valeurs faibles.

Dans l'exemple de réalisation décrit dans cette demande, le signal exploitable envoyé à l'instrument de mesure est une tension électrique qui lui est transmise par conduction. Cette transmission peut également être assurée d'une autre manière, grâce à des supports immatériels. Elle peut en particulier l'être par ondes optiques, par exemple pour la transmission par infrarouge. Elle peut également l'être par radio ou par couplage électromagnétique. Elle peut enfin l'être par ondes acoustiques, dans le cas des transmissions par ultrasons.

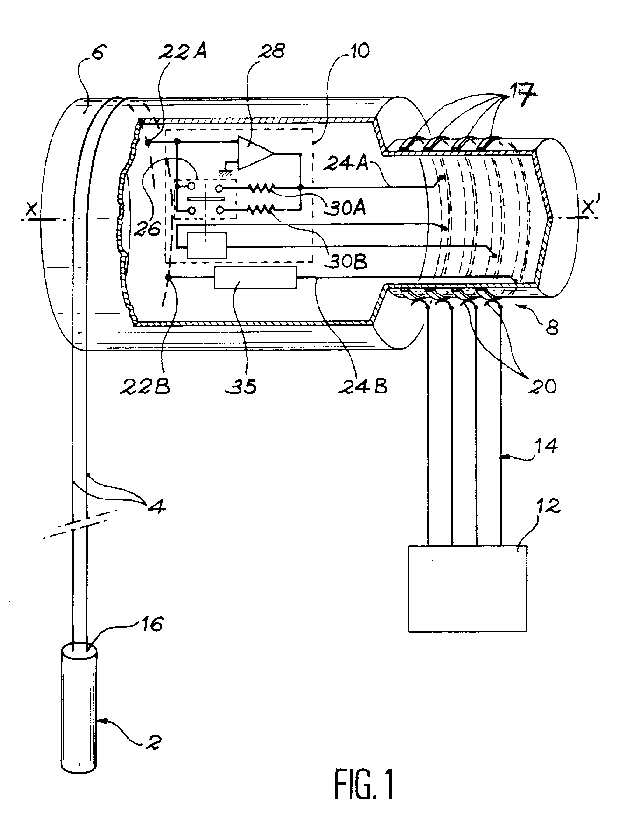

En référence à la figure 1, le détecteur 2 est attaché à la première extrémité 16 d'un câble 4, de préférence électrique. La deuxième extrémité de ce câble est fixée à la surface d'un tambour 6. Ce dernier est monté tournant autour d'un axe de rotation X, X', de sorte qu'une rotation du tambour enroule ou déroule le câble 4, et fait donc déplacer en translation le détecteur 2, selon une trajectoire définie par la trajectoire du câble 4.

Sur la figure 1, le détecteur a été représenté suspendu dans le vide, c'est donc un mouvement de montée ou de descente qui sera produit par la rotation du tambour 6. Ceci n'est évidemment qu'un exemple de réalisation. Le détecteur mobile 2 constitue la première extrémité de la chaîne de mesure. Ce détecteur 2 est générateur d'un premier signal électrique représentatif de la mesure de la grandeur physique qu'il effectue. Dans la réalisation décrite sur la figure 1, le détecteur 2 est une chambre d'ionisation et fournit une intensité de courant électrique. Le câble 4 transmet ce signal au reste de la chaîne de mesure. Dans le cas de la transmission d'une intensité de courant, il peut être constitué d'un fil unique transmettant, à la fois l'intensité de courant caractéristique de la mesure, et les tensions de polarisation du détecteur 2. La réalisation de ce câble 4 au moyen de deux conducteurs est préférable, chacun de ces deux conducteurs ayant sa fonction propre, en l'occurrence d'une part, la transmission de l'intensité de courant, et d'autre part la polarisation du détecteur 2.

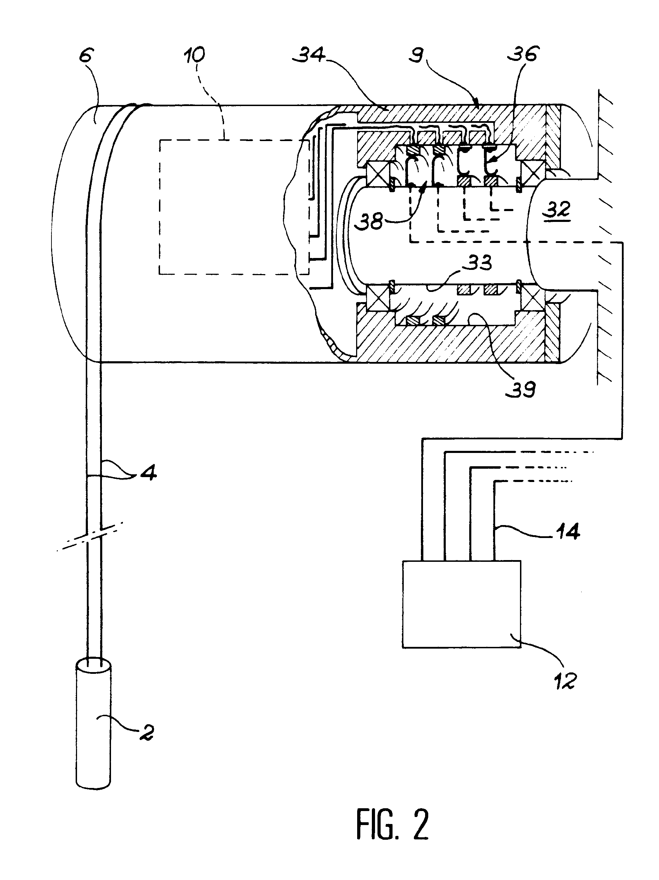

Selon l'invention, le signal issu de la deuxième extrémité du câble 4 est transmis à un dispositif de transmission, repéré globalement par la référence 8. Ce dispositif de transmission 8 réalise la transmission de ce signal issu d'un endroit solidaire du tambour 6 qui tourne autour de l'axe X, X' à un ou plusieurs deuxièmes câbles 14 fixes. Ces derniers aboutissent à des moyens fixes d'exploitation du signal exploitable. En l'occurrence un voltmètre 12, dans le cas de la réalisation représentée sur les figures 1 et 2.

Ce dispositif de transmission par conduction 8 comporte au moins une bague collectrice 17 sur laquelle vient frotter un balai 20 placé en regard de cette bague 17. Un de ces deux éléments est placé sur le tambour 6, l'autre est solidaire d'une partie fixe de la deuxième extrémité de la chaîne. Le tambour 6 et cette partie fixe sont coaxiaux, une face externe de l'un étant entourée d'une surface interne de l'autre.

Plusieurs réalisations sont ainsi possibles. En référence en particulier à la figure 1, les bagues collectrices 17 sont, dans ce cas, placées sur la surface externe du tambour 6, en regard de balais 20 fixes et connectés aux câbles 14. Les bagues collectrices 16 sont bien sûr connectées à la deuxième extrémité du premier câble 4.

Des moyens de conversion du premier signal électrique représentatif de la mesure en un deuxième signal électrique exploitable sont indispensables. Il s'agit ici en l'occurrence d'un convertisseur courant-tension 10. Selon l'invention, ce convertisseur 10 est prévu solidaire du tambour 6. Il est placé sur le tambour 6 ou à l'intérieur de ce dernier, comme le suggère la figure 1 sur laquelle le tambour 6 est partiellement écorché pour montrer ce convertisseur 10 placé à l'intérieur du tambour 6. Ce convertisseur 10 a ses entrées 22A et 22B connectées à la ou aux deuxièmes extrémités du premier câble 4. Ces sorties 24A et 24B sont connectées aux bagues collectrices 16.

De la sorte, la conversion du premier signal électrique représentatif de la mesure, issu du détecteur 2, en l'occurrence une intensité de courant, en un deuxième signal électrique exploitable se fait à l'intérieur du tambour 6, avant son transport vers le dispositif d'exploitation 12, en l'occurrence ici un voltmètre.

On voit que la carte électronique portant le convertisseur 10 placé sur le tambour 6 sert également au passage de la basse tension nécessaire au convertisseur et à la commande de relais 26.

Dans la réalisation représentée sur cette figure 1, la transformation courant-tension est réalisée dans le convertisseur 10 au moyen d'un amplificateur 28 recevant la première entrée 22A du convertisseur 10, une résistance de contre-réaction 30A et 30B, sélectionnée par le relais 26 sert à cette transformation courant-tension.

Dans le cas de l'utilisation d'un premier câble 4 comportant plusieurs conducteurs, la deuxième entrée 22B, en coopération avec la deuxième sortie 24B, sert à l'alimentation d'un boîtier haute-tension 35, pour la polarisation du détecteur 2, et est placé sur le tambour 6.

Ce convertisseur tournant 10, utilisant la transformation courant-tension juste avant le passage électrique tournant, est sensible aux forces électromotrices parasites des contacts tournants des moyens de transmission 8. Toutefois, cette tension de bruits parasites est négligeable, surtout si la résistance de contre réaction 30A, 30B est suffisamment élevée.

Comme le montre la figure 2, une deuxième variante de réalisation de l'invention permet d'utiliser des moyens de transmission 9 par conduction différents. Le tambour 6 se prolonge par une partie annulaire 34, dont la surface interne 39 entoure un axe 32. Les couples bagues collectrices-balais 36 et 38 sont placés sur cette surface interne 39 du tambour 34 et sur la surface externe 33 de l'axe 32. Le premier montage repéré 36, utilise une bague fixée sur l'axe 32 et un balai fixé sur le tambour 34. Le deuxième montage repéré 38 est l'inverse du premier. Dans ces deux cas, l'arbre 32 est fixe, et constitue la deuxième extrémité de la chaîne. Ce tambour 6 est monté tournant autour de cet axe 32.

Le détecteur décrit dans la réalisation des figures 1 et 2 peut également délivrer, non pas un courant électrique, mais une charge électrique, celui-ci fonctionnant en impulsions.

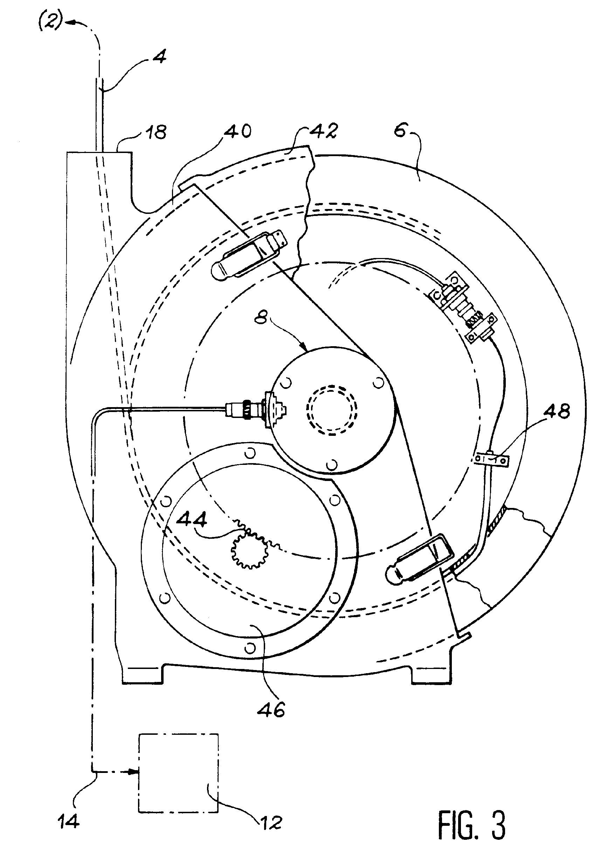

En référence à la figure 3, un montage du dispositif de mesure selon l'invention peut être réalisé de la manière suivante. Un bâti 40 supporte l'ensemble.

Sur celui-ci est placé un couvercle 42 à l'intérieur duquel est placé le tambour tournant 6. Le premier câble 4 arrive tangentiellement au tambour 6 par une entrée 48 ménagée dans le bâti 40. Ce premier câble 4 s'enroule autour du tambour 6, sa deuxième extrémité 48 étant fixée sur le tambour. Un moteur d'enroulement 46 est placé de telle sorte que son axe soit parallèle à celui du tambour 6. Ce dernier se termine par les contacts électriques tournants à la sortie desquels se trouve le deuxième câble 14 conduisant au voltmètre fixe 12. Ce montage est utilisé dans un réacteur nucléaire, pour établir la carte de flux.

Dans l'application décrite sur la figure 3, le détecteur de flux peut être mobile horizontalement, ou de bas en haut, grâce à l'engrenage du câble 4 de type Téléflex.

Dans la réalisation de l'invention, qui vient d'être décrite dans la présente description, le détecteur est une chambre d'ionisation, particulièrement destinée à la détection de photons gamma. Il peut être également une chambre d'ionisation pour mesure d'autres particules d'énergie fixée, ou une chambre à fission, pour détecter les neutrons, ou tout autre capteur de manière générale.

D'autres réalisations de l'invention peuvent être envisagées avec des moyens de transmission n'opérant pas par conduction. Par exemple, on peut envisager que le signal délivré par le convertisseur soit optique ou converti sous forme optique. Dans ce cas, les moyens de transmission peuvent transmettre, sans montage à contact tournant, un signal optique à la partie fixe de la chaîne de détection. La réalisation trouve son application dans la transmission.

De même, un signal électromagnétique, et en particulier un signal radio peut être utilisé, de même qu'un couplage électromagnétique pour la transmission d'ondes radio.

Enfin, un signal acoustique peut être appliqué à la présente invention, pour la transmission par ultrasons.

Les secteurs d'utilisation de l'invention sont nombreux. Elle peut être utilisée pour contrôler le stockage de sources radioactives, d'éléments combustibles utilisés dans les réacteurs nucléaires, de déchets radioactifs, pour la radioprotection, pour la diagraphie en radioprospection. Dans le domaine nucléaire, l'invention peut être appliquée dans un réacteur, pour établir la carte de flux à basse puissance, ou la radioprotection dans des emplacements présentant des conditions d'environnement difficiles, ne permettant pas d'utiliser in situ un détecteur de grande sensibilité et/ou un convertisseur électronique (place réduite et/ou température supérieure à 100°C et/ou fort débit de dose).

De manière générale, elle est utilisable chaque fois qu'un courant ou qu'une charge issue d'un générateur mobile doit être transmis en un point fixe de mesure.

Dans le cas d'une charge électrique, telle qu'une charge de 1 microcoulomb délivrée par exemple par un compteur proportionnel, le convertisseur courant-tension solidaire du tambour est remplacé par un quantificateur de charge apte à délivrer une tension moyenne, de l'ordre de 0,1 V par exemple.

Elle peut aussi trouver son application lorsqu'une tension faible, de l'ordre d'un millivolt, par exemple, issue d'un thermocouple, doit être transmise sous la forme d'une tension moyenne, de l'ordre de 0,1 V par exemple, en un point fixe de mesure ; dans ce cas le convertisseur courant-tension solidaire du tambour est remplacé par un préamplificateur de tension.

Elle peut encore trouver son application lorsqu'un courant faible, de l'ordre du $10^{-9}$ Ampère, issu d'un détecteur tel qu'un collectron, doit être transmis sous forme d'un courant moyen de l'ordre de 4 à $20.10^{-3}$ Ampère en un point fixe de mesure éloigné, par l'intermédiaire d'une boucle de courant. Dans ce cas, le convertisseur courant-tension solidaire du tambour est remplacé par un amplificateur de courant.

**Revendications**

1. Dispositif de mesure de grandeur physique au moyen d'un capteur mobile, te dispositif étant constitué d'une chaîne de mesure comprenant un capteur mobile (2) constituant une première extrémité mobile de la chaîne, générateur d'un premier signal électrique représentatif de ladite mesure et étant connecté à une première extrémité (16) d'un premier câble électrique (4) s'enroulant autour d'un tambour (6) mobile en rotation pour faire passer te capteur mobile (2) à travers une zone à mesurer, une deuxième extrémité du câble (4) étant fixée au tambour (6), des moyens de conversion (10) du premier signal électrique représentatif de ladite mesure en un deuxième signal électrique exploitable, et des moyens de transmission (8, 9) qui comportent au moins une bague collectrice (17) sur laquelle vient frotter un balai (20) placé en regard de cette bague (17), un de ces deux éléments étant placé sur te tambour (6), l'autre étant solidaire d'une partie fixe de la deuxième extrémité de ta chaîne, te tambour (6) et cette partie fixe étant coaxiaux, une surface externe (33) de l'un étant placée en regard d'une surface interne (39) de l'autre, pour transmettre ledit deuxième signal électrique exploitable issu des moyens de conversion (10) à une deuxième extrémité fixe de la chaîne, qui est constituée de moyens d'exploitation (12) du signal exploitable, représentatif de ladite mesure, le dispositif étant caractérisé en ce que les moyens de conversion (10) sont solidaires du tambour (6) et reçoivent le signal représentatif de la mesure issue du premier câble (4) et délivrent le signal exploitable aux moyens de transmission (8, 9).

2. Dispositif selon la revendication 1, caractérisé en ce que le premier signal de mesure est un courant électrique, et que le deuxième signal exploitable est une tension électrique.

3. Dispositif selon la revendication 1, caractérisé en ce que le premier signal de mesure est une charge électrique, le deuxième signal exploitable étant une tension électrique.

4. Dispositif selon la revendication 1, caractérisé en ce que le premier signal de mesure est une faible tension électrique, le deuxième signal exploitable étant une tension électrique.

5. Dispositif selon la revendication 1, caractérisé en ce que le détecteur (2) est une chambre d'ionisation ou une chambre à fission.

6. Dispositif selon la revendication 2, caractérisé en ce que les moyens de conversion sont constitués d'un convertisseur courant-tension (10).

7. Dispositif selon la revendication 1, caractérisé en ce que la bague collectrice (17) est fixée sur la surface externe du tambour (6), le balai (20) étant solidaire de la deuxième extrémité de la chaîne et étant placé en regard de la bague (17).

8. Dispositif selon la revendication 1, caractérisé en ce le tambour (6) possède une partie annulaire (34) entourant un axe fixe (32).

9. Dispositif selon la revendication 1, caractérisé en ce qu'il comprend, pour la polarisation dudit capteur (2), un boîtier d'alimentation en haute tension (35) placé sur le tambour (6).

**Patentansprüche**

1. Meßeinrichtung für physikalische Größen durch einen beweglichen Sensor, wobei die Einrichtung aus einer Meßkette besteht, die einen beweglichen Sensor (2), der ein erstes bewegliches Ende der Kette bildet und ein erstes elektrisches Signal erzeugt, das die Messung wiedergibt, und der mit einem ersten Ende (16) eines ersten elektrischen Kabels (4), das um eine drehbar bewegliche Trommel (6) aufgewickelt ist, um den beweglichen Sensor (2) durch einen zu messenden Bereich zu bewegen, verbunden ist, Vorrichtungen (10) zur Umwandlung des ersten, die Messung wiedergebenden elektrischen Signals in ein zweites, auswertbares elektrisches Signal und Übertragungsvorrichtungen (8, 9) umfaßt, die wenigstens einen Kollektorring (17) umfassen, auf dem ein gegenüber diesem Ring (17) angeordneter Läufer (20) läuft, wobei eines dieser beiden Elemente auf der Trommel (6) angeordnet ist und das andere mit einem festen Teil des zweiten Endes der Kette verbunden ist, wobei die Trommel (6) und dieser feste Teil koaxial sind, wobei sich eine äußere Oberfläche (33) des einen gegenüber einer inneren Oberfläche (39) des anderen befindet, um das zweite, auswertbare elektrische Signal, das von den Wandlervorrichtungen (10) erzeugt wird, an ein zweites, festes Ende der Kette zu übertragen, das aus Auswertevorrichtungen (12) für das auswertbare, die Messung wiedergebende Signal besteht, wobei die Einrichtung dadurch gekennzeichnet ist, daß die Wandlervorrichtungen (10) an der Trommel (6) befestigt sind und das die Messung wiedergebende, von dem ersten Kabel (4) übertragene Signal erhalten und das auswertbare Signal an die Übertragungsvorrichtungen (8, 9) weitergeben.

2. Einrichtung nach Anspruch 1, dadurch gekennzeichnet, daß das erbte Meßsignal ein elektrischer Strom ist und daß das zweite, auswertbare Signal eine elektrische Spannung ist.

3. Einrichtung nach Anspruch 1, dadurch gekennzeichnet, daß das erste Meßsignal eine elektrische Ladung ist und daß das zweite, auswertbare Signal eine elektrische Spannung ist.

4. Einrichtung nach Anspruch 1, dadurch gekennzeichnet, daß das erste Meßsignal eine schwache elektrische Spannung ist und daß das zweite, auswertbare Signal eine elektrische Spannung ist.

5. Einrichtung nach Anspruch 1, dadurch gekennzeichnet, daß der Detektor (2) eine Ionisationskammer oder eine Spaltungskammer ist.

6. Einrichtung nach Anspruch 2, dadurch gekennzeichnet, daß die Wandlervorrichtungen aus einem Strom-Spannungswandler (10) bestehen.

7. Einrichtung nach Anspruch 1, dadurch gekennzeichnet, daß der Rollektorring (17) auf der äußeren oberfläche der Trommel (6) befestigt ist, während der Läufer (20) mit dem zweiten Ende der Kette verbunden ist und gegenüber dem Ring (17) angeordnet ist.

8. Einrichtung nach Anspruch 1, dadurch gekennzeichnet, daß die Trommel (6) einen ringförmigen, eine feste Achse (32) umgebenden Teil (34) besitzt.

9. Einrichtung nach Anspruch 1, dadurch gekennzeichnet, daß sie zur Polarisierung des Sensors (2) ein auf der Trommel (6) angeordnetes Hochspannungsgehäuse (35) umfaßt.

**Claims**

1. Physical quantity measuring device with the aid of a mobile sensor, the device being constituted by a measuring chain incorporating a mobile sensor (2) forming a first mobile end of the chain and which generates a first electrical signal representative of the said measurement and being connected to a first end (16) of a first electric cable (4) which is wound onto a rotatable drum (6) for passing the mobile sensor (2) through the area to be measured, a second end of the cable (4) being fixed to the drum (6), means (10) for the conversion of the first electrical signal representative of said measurement and a second exploitable electrical signal, and transmission means (8, 9) having at least one collecting ring (17), against which rubs a brush (20) placed facing the said ring (17), one of the two elements being placed on the drum (6), the other being integral with a fixed part of the second end of the chain, the drum (6) and said fixed part being coaxial, an outer surface (33) of one being positioned facing an inner surface (39) of the other, in order to transmit said exploitable electrical signal from the conversion means (10) to a second fixed end of the chain, which is constituted by means (12) for exploiting the exploitable signal and representative of the said measurement, the device being characterized in that the conversion means (10) are integral with the drum (6) and receive the signal representative of the measurement from the first cable (4) and supply the exploitable signal to the transmission means (8, 9).

2. Device according to claim 1, characterized in that the first measuring signal is an electric current and that the second exploitable signal is an electric voltage.

3. Device according to claim 1, characterized in that the first measuring signal is an electric load and the second exploitable signal an electric voltage.

4. Device according to claim 1, characterized in that the first measuring signal is a low electric voltage and the second exploitable signal is an electric voltage.

5. Device according to claim 1, characterized in that the detector (2) is an ionization chamber or a fission chamber.

6. Device according to claim 2, characterized in that the conversion means are constituted by a current-voltage converter (10).

7. Device according to claim 1, characterized in that the collecting ring (17) is fixed to the outer surface of the drum (6), the brush (20) being integral with the second end of the chain and is positioned facing the ring (17).

8. Device according to claim 1, characterized in that the drum (6) has an annular section (34) surrounding a fixed spindle (32).

9. Device according to claim 1, characterized in that, for the polarization of the said sensor (2), it comprises a high voltage power box (35) placed on the drum (6).

FIG. 1

FIG. 2

FIG. 3